(19) Europäisches Patentamt / European Patent Office / Office européen des brevets

(11) **EP 4 327 584 B1**

(12) **EUROPEAN PATENT SPECIFICATION**

(45) Date of publication and mention
of the grant of the patent:
**06.05.2026   Bulletin 2026/19**

(21) Application number: **21958705.2**

(22) Date of filing: **29.09.2021**

(51) International Patent Classification (IPC):
*H04W 24/02* *(2009.01)*

(52) Cooperative Patent Classification (CPC):
**H04W 24/02; H04L 5/0053; H04L 5/0094;**
**H04W 52/0229;** H04L 5/001; H04W 8/24;
H04W 52/0212

(86) International application number:
**PCT/CN2021/121552**

(87) International publication number:
**WO 2023/050112 (06.04.2023 Gazette 2023/14)**

(54) **METHOD, DEVICE, AND SYSTEM FOR POWER SAVING IN WIRELESS NETWORKS**

VERFAHREN, VORRICHTUNG UND SYSTEM ZUR ENERGIEEINSPARUNG IN DRAHTLOSEN
NETZWERKEN

PROCÉDÉ, DISPOSITIF ET SYSTÈME D'ÉCONOMIE D'ÉNERGIE DANS DES RÉSEAUX SANS FIL

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**28.02.2024   Bulletin 2024/09**

(73) Proprietor: **ZTE Corporation**
**Shenzhen, Guangdong  518057 (CN)**

(72) Inventors:
• **MA, Xiaoying**
  **Shenzhen, Guangdong 518057 (CN)**
• **XU, Jun**
  **Shenzhen, Guangdong 518057 (CN)**
• **MA, Xuan**
  **Shenzhen, Guangdong 518057 (CN)**
• **CHEN, Mengzhu**
  **Shenzhen, Guangdong 518057 (CN)**
• **PENG, Focai**
  **Shenzhen, Guangdong 518057 (CN)**

(74) Representative: **Vossius & Partner**
**Patentanwälte Rechtsanwälte mbB**
**Siebertstraße 3**
**81675 München (DE)**

(56) References cited:
WO-A1-2021/098052      WO-A1-2021/098053
CN-A- 110 546 982        US-A1- 2020 229 092
US-A1- 2020 389 874      US-A1- 2020 404 669
US-A1- 2021 266 841

• OPPO: "DCI based power saving adaptation",
3GPP DRAFT; R2-1903297 - DCI BASED POWER
SAVING ADAPTATION, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, vol. RAN WG2, no.
Xi'an, China; 20190406 - 20190412, 28
March 2019 (2019-03-28), Mobile Competence
Centre ; 650, route des Lucioles ; F-06921
Sophia-Antipolis Cedex ; France
, XP051692570

- HUAWEI, HISILICON: "Further discussion on the impact of DCI-based PDCCH skipping", 3GPP DRAFT; R2-1906904 FURTHER DISCUSSION ON THE IMPACT OF DCI-BASED PDCCH SKIPPING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20190513 - 20190517, 3 May 2019 (2019-05-03), Mobile Competence Centre ; 650, route des Lucioles ; F-06921 Sophia-Antipolis Cedex ; France
, XP051711203

**Description**

TECHNICAL FIELD

This disclosure is directed generally to wireless communications, and particularly to methods and a device for saving User Equipment (UE) power consumption.

BACKGROUND

Energy efficiency is a key performance index in the wireless communication network. Controlling power consumption and reducing energy cost is critical for developing and deploying a wireless communication network. Energy saving technology is plays an essential role in achieving this goal. From a UE perspective, UE battery life has great impact on user experience. It is beneficial to have the capability to dynamically control the power consumption of a UE yet still meet performance requirement.

WO 2021/098052 A1, US 2021/266841 A1, US 2020/229092 A1, and US 2020/389874 A1 are related prior art documents.

SUMMARY

The invention is specified by the independent claims. Preferred embodiments are defined in the dependent claims. In the following description, although numerous features may be designated as optional, it is nevertheless acknowledged that all features comprised in the independent claims are not to be read as optional. Objects of the invention are methods and a device according to the appended independent claims for saving UE power consumption in wireless. Preferred embodiments are covered by the appended dependent claims. communications.

In some embodiments, a method performed by a UE in a wireless network is disclosed. The method may include receiving, from a wireless communication node, a configuration message comprising configuration information associated with a Physical Downlink Control Channel (PDCCH) monitoring behavior set; receiving, from the wireless communication node, a control message indicating a PDCCH monitoring behavior from the PDCCH monitoring behavior set or a PDCCH monitoring behavior associated with the PDCCH monitoring behavior set; and determining the PDCCH monitoring behavior based on the control message.

In some embodiments, a method performed by a wireless communication node in a wireless network is disclosed. The method may include transmitting, to a User Equipment (UE) in the wireless network, a configuration message comprising configuration information associated with a Physical Downlink Control Channel (PDCCH) monitoring behavior set; and transmitting, to the UE, a control message indicating a PDCCH monitoring behavior from the PDCCH monitoring behavior set or a PDCCH monitoring behavior associated with the PDCCH monitoring behavior set.

In some embodiments, there is a UE and/or a wireless communication node comprising a processor and a memory, wherein the processor is configured to read code from the memory and implement any methods recited in any of the embodiments.

In some embodiments, a computer program product comprising a computer-readable program medium code stored thereupon, the code, when executed by a processor, causing the processor to implement any method recited in any of the embodiments.

The above embodiments and other aspects and alternatives of their implementations are described in greater detail in the drawings, the descriptions, and the claims below.

BRIEF DESCRIPTION OF THE DRAWINGS

FIG. 1 shows an example wireless communication network.
FIG. 2 shows an example wireless network node.
FIG. 3 shows an example user equipment.
FIG. 4 shows exemplary steps for controlling UE PDCCH monitoring behavior in the wireless communication network.
FIG. 5 shows an exemplary mapping of codepoints with PDCCH monitoring behaviors.

DETAILED DESCRIPTION

**Wireless Communication Network**

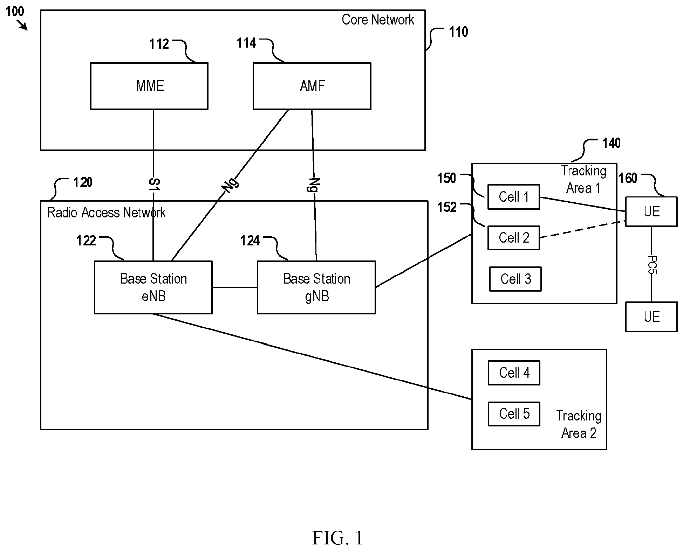

FIG. 1 shows an exemplary wireless communication network 100 that includes a core network 110 and a radio access network (RAN) 120. The core network 110 further includes at least one Mobility Management Entity (MME) 112 and/or at least one Access and Mobility Management Function (AMF). Other functions that may be included in the core network 110 are not shown in FIG. 1. The RAN 120 further includes multiple base stations, for example, base stations 122 and 124. The base stations may include at least one evolved NodeB (eNB) for 4G LTE, or a Next generation NodeB (gNB) for 5G New Radio (NR), or any other type of signal transmitting/receiving device such as a UMTS NodeB. The eNB 122 communicates with the MME 112 via an S1 interface. Both the eNB 122 and gNB 124 may connect to the AMF 114 via an Ng interface. Each base station manages and supports at least one cell. For example, the base station gNB 124 may be configured to manage and support cell 1, cell 2, and cell 3.

The gNB 124 may include a central unit (CU) and at least one distributed unit (DU). The CU and the DU may be co-located in a same location, or they may be split in different locations. The CU and the DU may be connected via an F1 interface. Alternatively, for an eNB which is capable of connecting to the 5G network, it may also be similarly divided into a CU and at least one DU, referred to as ng-eNB-CU and ng-eNB-DU, respectively. The ng-eNB-CU and the ng-eNB-DU may be connected via a W1 interface.

The wireless communication network 100 may include one or more tracking areas. A tracking area may include a set of cells managed by at least one base station. For example, tracking area 1 labeled as 140 includes cell 1, cell 2, and cell 3, and may further include more cells that may be managed by other base stations and not shown in FIG. 1. The wireless communication network 100 may also include at least one UE 160. The UE may select a cell among multiple cells supported by a base station to communication with the base station through Over the Air (OTA) radio communication interfaces and resources, and when the UE 160 travels in the wireless communication network 100, it may reselect a cell for communications. For example, the UE 160 may initially select cell 1 to communicate with base station 124, and it may then reselect cell 2 at certain later time point. The cell selection or reselection by the UE 160 may be based on wireless signal strength/quality in the various cells and other factors.

The wireless communication network 100 may be implemented as, for example, a 2G, 3G, 4G/LTE, or 5G cellular communication network. Correspondingly, the base stations 122 and 124 may be implemented as a 2G base station, a 3G NodeB, an LTE eNB, or a 5G NR gNB. The UE 160 may be implemented as mobile or fixed communication devices which are capable of accessing the wireless communication network 100. The UE 160 may include but is not limited to mobile phones, laptop computers, tablets, personal digital assistants, wearable devices, Internet of Things (IoT) devices, MTC/eMTC devices, distributed remote sensor devices, roadside assistant equipment, XR devices, and desktop computers. The UE 160 may also be generally referred to as a wireless communication device, or a wireless terminal. The UE 160 may support sidelink communication to another UE via a PC5 interface.

While the description below focuses on cellular wireless communication systems as shown in FIG. 1, the underlying principles are applicable to other types of wireless communication systems for paging wireless devices. These other wireless systems may include but are not limited to Wi-Fi, Bluetooth, ZigBee, and WiMax networks.

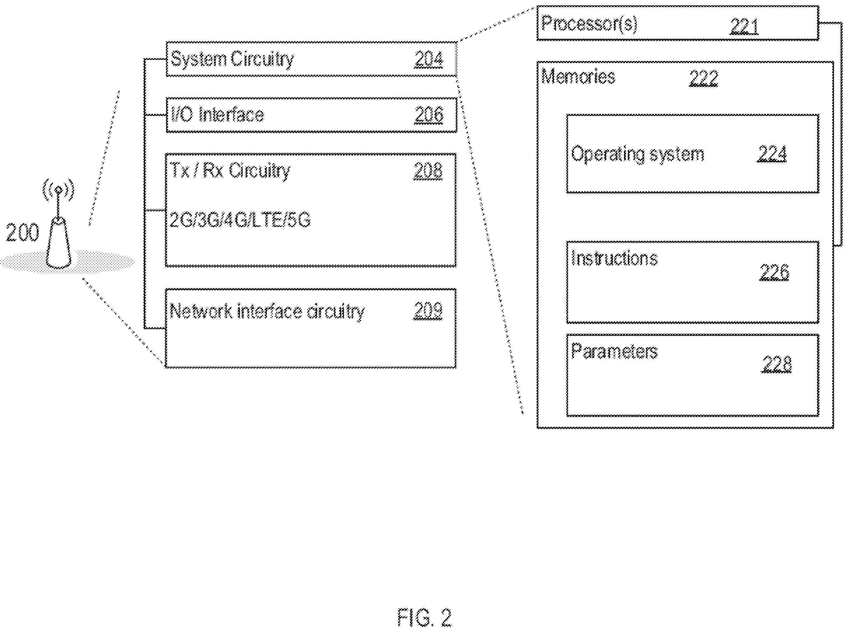

FIG. 2 shows an example of electronic device 200 to implement a network base station (e.g., a radio access network node), a core network (CN), and/or an operation and maintenance (OAM). Optionally in one implementation, the example electronic device 200 may include radio transmitting/receiving (Tx/Rx) circuitry 208 to transmit/receive communication with UEs and/or other base stations. Optionally in one implementation, the electronic device 200 may also include network interface circuitry 209 to communicate the base station with other base stations and/or a core network, e.g., optical or wireline interconnects, Ethernet, and/or other data transmission mediums/protocols. The electronic device 200 may optionally include an input/output (I/O) interface 206 to communicate with an operator or the like.

The electronic device 200 may also include system circuitry 204. System circuitry 204 may include processor(s) 221 and/or memory 222. Memory 222 may include an operating system 224, instructions 226, and parameters 228. Instructions 226 may be configured for the one or more of the processors 221 to perform the functions of the network node. The parameters 228 may include parameters to support execution of the instructions 226. For example, parameters may include network protocol settings, bandwidth parameters, radio frequency mapping assignments, and/or other parameters.

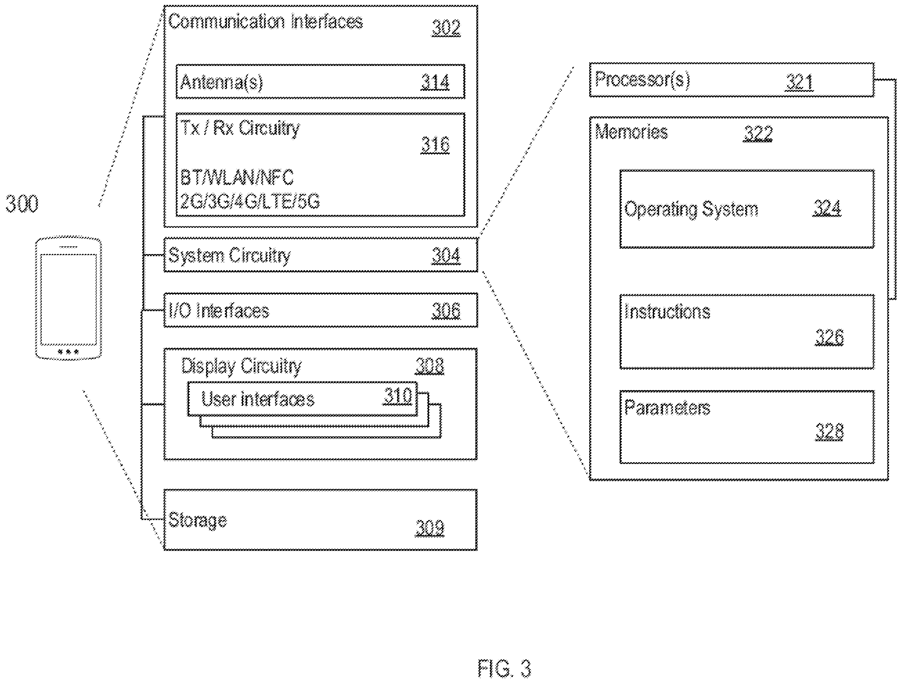

FIG. 3 shows an example of an electronic device to implement a terminal device 300 (for example, a user equipment (UE)). The UE 300 may be a mobile device, for example, a smart phone or a mobile communication module disposed in a vehicle. The UE 300 may include a portion or all of the following: communication interfaces 302, a system circuitry 304, an input/output interfaces (I/O) 306, a display circuitry 308, and a storage 309. The display circuitry may include a user interface 310. The system circuitry 304 may include any combination of hardware, software, firmware, or other logic/circuitry. The system circuitry 304 may be implemented, for example, with one or more systems on a chip (SoC), application specific integrated circuits (ASIC), discrete analog and digital circuits, and other circuitry. The system circuitry 304 may be a part of the implementation of any desired functionality in the UE 300. In that regard, the system circuitry 304 may include logic that facilitates, as examples, decoding and playing music and video, e.g., MP3, MP4, MPEG, AVI, FLAC, AC3, or WAV decoding and playback; running applications; accepting user inputs; saving and retrieving application data; establishing, maintaining, and terminating cellular phone calls or data connections for, as one example, internet connectivity; establishing, maintaining, and terminating wireless network connections, Bluetooth connections, or other connections; and displaying relevant information on the user interface 310. The user interface 310 and the inputs/output (I/O) interfaces 306 may include a graphical user interface, touch sensitive display, haptic feedback or other haptic output, voice or facial recognition inputs, buttons, switches, speakers and other user interface elements. Additional examples of the I/O interfaces 306 may include microphones, video and still image cameras, temperature sensors, vibration sensors, rotation and orientation sensors, headset and microphone input / output jacks, Universal Serial Bus (USB) connectors, memory card slots, radiation sensors (e.g., IR sensors), and other types of inputs.

Referring to FIG. 3, the communication interfaces 302 may include a Radio Frequency (RF) transmit (Tx) and receive (Rx) circuitry 316 which handles transmission and reception of signals through one or more antennas 314. The communication interface 302 may include one or more transceivers. The transceivers may be wireless transceivers that include modulation / demodulation circuitry, digital to analog converters (DACs), shaping tables, analog to digital converters (ADCs), filters, waveform shapers, filters, pre-amplifiers, power amplifiers and/or other logic for transmitting and receiving through one or more antennas, or (for some devices) through a physical (e.g., wireline) medium. The transmitted and received signals may adhere to any of a diverse array of formats, protocols, modulations (e.g., QPSK, 16-QAM, 64-QAM, or 256-QAM), frequency channels, bit rates, and encodings. As one specific example, the communication interfaces 302 may include transceivers that support transmission and reception under the 2G, 3G, BT, WiFi, Universal Mobile Telecommunications System (UMTS), High Speed Packet Access (HSPA)+, 4G / Long Term Evolution (LTE) , and 5G standards. The techniques described below, however, are applicable to other wireless communications technologies whether arising from the 3rd Generation Partnership Project (3GPP), GSM Association, 3GPP2, IEEE, or other partnerships or standards bodies.

Referring to FIG. 3, the system circuitry 304 may include one or more processors 321 and memories 322. The memory 322 stores, for example, an operating system 324, instructions 326, and parameters 328. The processor 321 is configured to execute the instructions 326 to carry out desired functionality for the UE 300. The parameters 328 may provide and specify configuration and operating options for the instructions 326. The memory 322 may also store any BT, WiFi, 3G, 4G, 5G or other data that the UE 300 will send, or has received, through the communication interfaces 302. In various implementations, a system power for the UE 300 may be supplied by a power storage device, such as a battery or a transformer.

## Physical Downlink Control Channel (PDCCH) Monitoring

The PDCCH supports data and signaling message in a wireless communication network and plays a critical role in various aspects including, for example, downlink (DL) scheduling assignments, uplink (UL) scheduling grant, power control, paging indication, etc. A UE needs to monitor the PDCCH constantly in various manners. For example, a UE in connected state may monitor the PDCCH periodically based on Discontinuous Reception Mode (DRX). For another example, a UE in idle or inactive state may need to monitor the PDCCH for paging DCI, paging message, system information update, etc.

When monitoring the PDCCH, the UE needs to turn on certain hardware, such as its RF chain, which contributes to power consumption. Therefore, reducing the frequency of PDCCH monitoring may help reducing power consumption. The base station may coordinate with the UE to achieve such a goal. For example, the base station may be able to forecast or estimate that a UE will not have downlink data/signal to monitor for a period of time. The base station may then notify the UE, so the UE may skip PDCCH monitoring for a certain duration yet will not increase much latency.

## Search Space Set Group (SSSG) Switching

In the wireless communication network, a UE may be configured with one or more search space set groups (SSSGs). Each SSSG may include zero, one or more search space (SS) set and may have its own characteristics. For example, each SSSG may be associated with a different PDCCH monitoring periodicity and may have different number of search space sets. The UE may monitor the PDCCH based on one of the SSSGs. The UE may consume more energy if the SSSG is configured with more search space sets and/or shorter PDCCH monitoring periodicity.

The base station, based on UE traffic characteristics, may instruct the UE to switch from one SSSG to another, in order to meet a specific performance requirement and minimize UE power consumption.

## UE PDCCH Monitoring Behavior

In this disclosure, various UE PDCCH monitoring behaviors are described. These behaviors may be categorized into two types: the first type relates to UE PDCCH monitoring skipping (for a specific duration), and the second type relates to UE SSSG switching.

The first type PDCCH monitoring behavior may include:

- deactivating PDCCH monitoring skipping (i.e., deactivate the PDCCH monitoring skipping feature), or monitoring PDCCH according to search space set configuration.
- skipping PDCCH monitoring for a duration.

In one implementation, deactivating PDCCH monitoring skipping may mean not triggering or activating a PDCCH monitoring skipping behavior. In another implementation, deactivating PDCCH monitoring skipping may mean UE monitors PDCCH according to search space set configuration.

There may be multiple durations for which a UE may skip monitoring. Each duration corresponds to a UE PDCCH monitoring behavior. For example, the multiple durations may include 5 milliseconds, and 10 milliseconds. Each duration represents a behavior. For example, one behavior may be "skipping PDCCH monitoring for 5 milliseconds", and the other behavior may be "skipping PDCCH monitoring for 10 milliseconds". As such, a UE may be configured with a list of skipping PDCCH monitoring behaviors, each corresponds to a specific duration.

The second type PDCCH monitoring behavior may include:

- stop monitoring search space (SS) sets associated with search SSSG #1 and SSSG #2(if configured) and monitoring SS sets associated with SSSG #0.
- stop monitoring search space (SS) sets associated with search SSSG #0 and SSSG #2(if configured) and monitoring SS sets associated with SSSG #1.
- stop monitoring search space (SS) sets associated with search SSSG #0 and SSSG #1 and monitoring SS sets associated with SSSG #2.

In this disclosure, the first type PDCCH monitoring behavior may also be referred to as PDCCH monitoring skipping behavior, and the second type PDCCH monitoring behavior may also be referred to as SSSG switching behavior.

In this disclosure, there may be a first PDCCH monitoring behavior subset which includes first type PDCCH monitoring behaviors, and a second PDCCH monitoring behavior subset which includes second type PDCCH monitoring behaviors. The PDCCH monitoring behavior set includes these two subsets of behaviors.

In one implementation, when the UE starts monitoring search space (SS) sets associated with a particular SSSG, the UE may choose to stop monitoring SS sets associated with other SSSG.

### Control UE PDCCH Monitoring Behavior

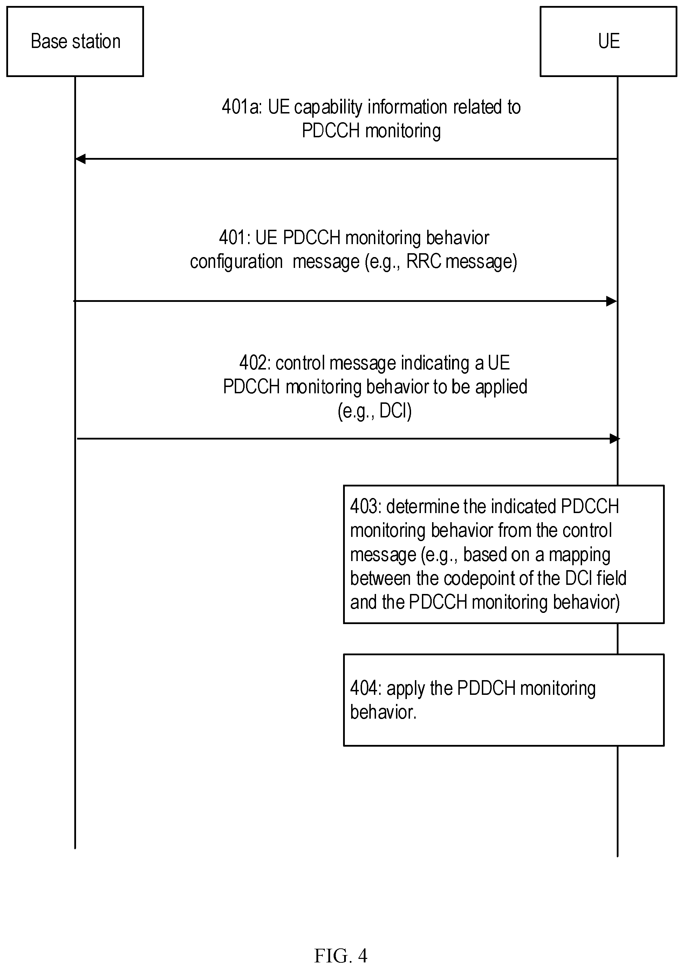

In this disclosure, various embodiments for controlling UE PDCCH monitoring behavior are described. FIG. 4 illustrates exemplary steps for the control process in a high level.

Step 401a: The UE may send its UE capability information related to PDCCH monitoring to the base station. The UE capability information may act as a reference for the base station. When configuring UE PDCCH monitoring behaviors in step 401, and instructing the UE to select a PDCCH monitoring behavior in step 402, the base station may refer to the UE capability information. For example, the UE capability information may indicate the maximum number of PDCCH monitoring behaviors that the UE can support, or the maximum number of bits that the UE may handle for targeting/selecting a PDCCH monitoring behavior. For example, a low-end UE may only be capable of handling just one bit for PDCCH monitoring behavior selection, whereas other UEs may handle two or more bits. This step may be performed before or after step 401. Further detail about this step will be describe in later section.

Step 401: The base station sends a configuration message to the UE for configuring PDCCH monitoring behaviors. The configuration message may include a list of PDCCH monitoring behaviors which need to be configured to the UE. This manner of configuration is referred to as an explicit configuration. The configuration message may also include a list of parameters related to PDCCH monitoring behaviors, and the list of parameters implicitly indicates PDCCH monitoring behaviors. For example, the list of parameters may include a list of PDCCH monitoring skipping durations, such as 2 milliseconds, 5 milliseconds, 10 milliseconds. Each duration corresponds to a PDCCH monitoring behavior of skipping PDCCH monitoring for the duration. That is, these 3 PDCCH monitoring behavior will be configured: skipping PDCCH monitoring for 2 milliseconds, skipping PDCCH monitoring for 5 milliseconds, and skipping PDCCH monitoring for 10 milliseconds. The SSSG switching behavior may be likely indicated by a list of parameters such as SSSG number/index. This manner of configuration is referred to as an implicit configuration as the PDCCH monitoring behavior is derived from these parameters. The list of PDCCH monitoring skipping durations, and the list of SSSG number/index may be sent to the UE in various manners. For example, they may be sent together in one signaling, or they may be sent alone, each in one signaling.

Step 402: The UE has the list of PDCCH monitoring behaviors configured per the configuration message in step 401. In order to trigger a PDCCH monitoring behavior change, the base station sends a control message to the UE to indicate a particular PDCCH monitoring behavior that the UE needs to apply (or activate). The control message maybe in the form a Downlink Control Information (DCI) message. The PDCCH monitoring behavior indication information may be carried in a DCI field of the DCI message.

Step 403: The UE decodes the control message (e.g., the DCI field) to obtain the indicated PDCCH monitoring behavior. To decode the DCI field, the UE may need to determine the bit-width of the DCI filed first. In one implementation, the UE may determine the indicated PDCCH monitoring behavior based on a mapping relationship between the codepoint of the DCI field and the PDCCH monitoring behavior. In this disclosure, a DCI field may include at least one bit and the codepoint is the value represented by the at least one bit. The DCI field may represent multiple codepoints using different bit combinations.

Step 404: The UE applies the indicated PDCCH monitoring behavior. For example, the UE may skip PDCCH monitoring for a duration associated with or specified in the indicated PDCCH monitoring behavior. For example, the UE may skip PDCCH monitoring for 5 milliseconds, or 10 milliseconds, as determined by the indicated PDCCH monitoring behavior. For another example, the UE may start monitoring search space sets associated with SSSG #2, and stop monitoring search space sets associated with SSSG #0 and SSSG #1.

Further detail is described below.

## PDCCH Monitoring Behavior Configuration

In one implementation, the base station may determine a list of UE PDCCH monitoring behaviors and sends the list to the UE. Alternatively, the base station may determine a list of parameters related to UE PDCCH monitoring behaviors. In determining the list, several factors are involved. These factors may include:

- UE capability;
- a pre-determined value/rule; and
- a bit-width of the DCI field carrying an indicator for PDCCH monitoring behavior selection.

These factors may be considered alone or in combinations.

In one implementation, the UE capability includes the maximum number of indication bits for indicating the selection of the PDCCH monitoring behavior that the UE supports or the number of indication bits for indicating the selection of the PDCCH monitoring behavior that the UE supports (denoted as M). In one implementation, the number of PDCCH monitoring behaviors supported by the UE is not greater than the $2^M$. Alternatively, the total number of of PDCCH skipping duration and/or the number of SSSGs configured should not be greater than the $2^M$.

In one implementation, the UE capability or the pre-determined value includes at least one of:

- the maximum number of PDCCH monitoring behaviors supported by the UE;
- the maximum number of PDCCH skipping durations supported by the UE; or
- the maximum number of SSSGs supported by the UE.
- the number of PDCCH monitoring behaviors supported by the UE;
- the number of PDCCH skipping durations supported by the UE; or
- the number of SSSGs supported by the UE.

In one implementation, the number of UE PDCCH monitoring behaviors configured should be less than or equal to: maximum number of PDCCH monitoring behaviors supported by the UE; or the sum of the maximum number of PDCCH skipping durations supported by the UE and the maximum number of SSSGs supported by the UE. In one implementation, the number of UE PDCCH monitoring skipping behaviors configured should be less than or equal to the maximum number of PDCCH skipping durations supported by the UE. In one implementation, the number of UE SSSG switching behaviors configured should be less than or equal to the maximum number of SSSGs supported by the UE. In one implementation, the number of UE PDCCH monitoring behaviors configured should be less than or equal to: number of PDCCH monitoring behaviors supported by the UE, or the sum of the number of PDCCH skipping durations supported by the UE and the number of SSSGs supported by the UE. In one implementation, the number of UE PDCCH monitoring skipping behaviors configured should be less than or equal to the number of PDCCH skipping durations supported by the UE. In one implementation, the number of UE SSSG switching behaviors configured should be less than or equal to the number of SSSGs supported by the UE.

In one implementation, the configuration of UE PDCCH monitoring behavior is based on the bit-width of the DCI field carrying the indicator for PDCCH monitoring behavior selection (refer to step 402 in FIG. 2). For example, the bit-width of the DCI field is configured as 1 bit and UE capability indicates supporting two PDCCH monitoring skipping behaviors, then only one or two PDCCH skipping monitoring durations may be configured. For another example, the bit-width of the DCI field is configured as 1 bit, then even UE capability indicates supporting 3 SSSG switching behaviors, only two SSSGs may be configured. For example, two SSSGs may be configured as "switch to" SSSGs.

In one implementation, the UE may be configured with different types of SSSGs. For example, there may be a first type SSSG. The first type SSSG may include at least one of the following:

- an SSSG configured without a search space set (e.g., an empty SSSG);
- a dormant SSSG;
- an SSSG associated with which the UE can stop monitoring PDCCH for a duration or before a timer expire; or
- an SSSG associated with an index greater than or equal to 2 (indicating there are more than 2 SSSGs in the set of SSSGs, SSSG index starts from 0).

In one implementation, it is not expected that a first type SSSG and PDCCH skipping duration are both configured to the UE.

In one implementation, it is not expected that a first type SSSG configured with a timer value which is the same as a PDCCH skipping duration.

In one implementation, it is not expected that a certain type of PDCCH monitoring behavior is configured if a first condition is satisfied:

The certain type of PDCCH monitoring behavior includes deactivating PDCCH monitoring skipping.

The first condition may be associated with at least one of the following: a high layer signaling, or a UE capability. The first condition is satisfied if:

- at least two SSSGs are configured;
- no PDCCH skipping duration is configured;
- at least a default SSSG is configured. In some embodiments, the default SSSG means the SSSG in which UE monitors PDCCH if no PDCCH monitoring behavior indication is received; or
- a first type SSSG is configured.

In one implementation, if the bit-width of the DCI field is 1, then only one type of PDCCH monitoring behaviors may be configured to the UE.

In one implementation, if the bit-width of the DCI field is 1, and UE capability indicates supporting SSSG switching behavior, two SSSG switching behaviors may be configured to the UE.

## Control Signal Mapping

As shown in FIG. 4, in step 403, the UE needs to determine the indicated PDCCH monitoring behavior base on the control message (e.g., a DCI message). In one implementation, a DCI field of the DCI message may carry the indication information. The UE may map the value (e.g., the codepoint (CP)) of the DCI field to a particular PDCCH monitoring behavior. In one implementation, the mapping may also be performed base on the bitmap formed by the bits of the DCI field.

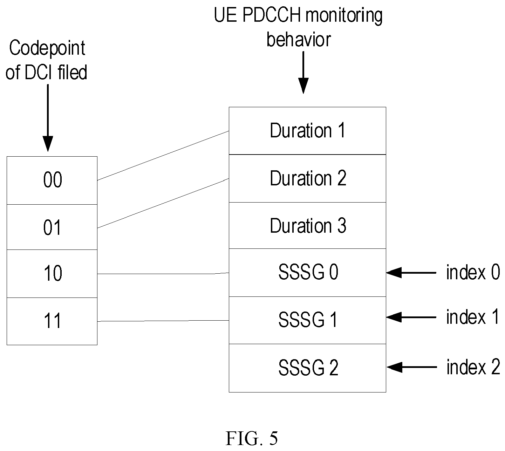

FIG. 5 shows an example using codepoint to map UE PDCCH monitoring behaviors. In this example, the DCI field has 2 bit (i.e., the bit-width is 2 bits) and there are 4 codepoints based on the 2 bits. The UE is configured with 6 PDCCH monitoring behaviors. Each duration represents a PDCCH monitoring skipping duration, and each SSSG represents a SSSG switching behavior. As shown in FIG. 5, 4 out of 6 PDCCH monitoring behaviors are mapped with a codepoint. In this disclosure, various embodiments are disclosed for the mapping.

In some embodiments, each SSSG may be associated with or indicated by an SSSG index. As shown in FIG. 5, index 2 may indicate SSSG 2. Further, the maximum SSSG index may also indicate the number of SSSGs configured in, for example, the list of SSSG, or the second PDCCH monitoring behavior subset.

When the UE maps the indication in the control message to a particular PDCCH monitoring behavior, several factors are involved. These factors include:

- a bit-width of the DCI field;
- a higher layer signaling;
- a number of PDCCH monitoring behaviors configured to the UE (e.g., configured via RRC signaling from the base station);
- a number of types of PDCCH monitoring behaviors configured to the UE;
- a UE capability;
- a predefined rule; or
- a predefined condition.

8

These factors may be considered alone or in combinations.

In order to decode the DCI field, the UE may need to obtain the bit-width of the DCI field first.

In one implementation, if the number of PDCCH monitoring behaviors configured to the UE is M, then the bit-width of the DCI field may be determined as $\min(A, \lceil log_2 M \rceil)$, A is an integer greater than 0.

In one implementation, if the number of first type PDCCH monitoring behaviors configured to the UE is M, and the number of second type PDCCH monitoring behaviors configured to the UE is N, then the bit-width of the DCI field may be determined as $\min(2, \lceil log_2 (M + N) \rceil)$, A is an integer greater than 0

In one implementation, if there is only one type of PDCCH monitoring behaviors configured to the UE, the bit-width may be determined as 1. If there are two types of PDCCH monitoring behaviors configured to the UE, the bit-width may be determined as 2.

In one implementation, the bit-width of the DCI field may be determined by the UE capability. The UE capability includes a maximum number of indication bits (i.e., the DCI bits) for indicating the selection of the PDCCH monitoring behavior that the UE supports. For example, the bit-width of DCI field is determined by $\min(\lceil \log_2 A \rceil, B)$, where A is the total number of configured PDCCH monitoring behaviors, B is the maximum number of indication bits for indicating the selection of the PDCCH monitoring behavior supported by the UE.

The DCI may have different format. A first type DCI may include DCI with DCI format 0-2, or DCI with DCI format 1-2. A second type DCI may include DCI with DCI format 1-1, or DCI with DCI format 0-1.

In one implementation, if the DCI is a first type DCI, the bit-width of the DCI field may be A bit. If the DCI is a second type DCI, the bit-width of DCI field may be B bit. A and B are predefined values, or determined according to the higher layer signaling and the UE capability of the UE.

In one implementation, if the DCI is a first type DCI, the bit-width of DCI field may be 1 bit. If the DCI is a second type DCI, the bit-width of DCI field may be max(2, B) bit, where B is the maximum number of indication bits for indicating the selection of the PDCCH monitoring behavior supported by the UE, which may be indicated or reported by UE capability.

In one implementation, if the DCI is a first type DCI, the bit-width of DCI field may be 1 bit. If the DCI is a second type DCI, the bit-width of DCI field may be min(A, B) bit, where A is the bit-width configured by high layer signaling, B is the maximum number of indication bits for indicating the selection of the PDCCH monitoring behavior supported by the UE.

In one implementation, a codepoint of the DCI may be mapped to a PDCCH monitoring behavior according an order of the parameter list in the configuration message. For example, a configuration message configures a list of parameters related to UE PDCCH monitoring behaviors, the codepoint of the DCI may be mapped to a PDCCH monitoring behavior based on the order of the elements in the list. For example, the codepoint value m mapped to the m-th PDCCH monitoring behavior in the list.

In one implementation, a codepoint of the DCI may be mapped to a PDCCH monitoring behavior. For example, the UE may be configured with M PDCCH skipping durations and no SSSG. If M is less than 4, then the first codepoint (e.g., the smallest codepoint or codepoint with all zero value) in DCI means the behavior is "deactivating PDCCH monitoring skipping". Other codepoint values may have a mapping relationship with PDCCH skipping durations. For example, each configured PDCCH skipping duration may be associated with an index. A codepoint value m may indicate a PDCCH skipping duration with index m-1. If M=4, codepoint value m indicates a PDCCH skipping duration with index m. The index associated with the PDCCH skipping duration may be indicated by a higher layer signaling (e.g., the RRC signaling configuring the PDCCH monitoring behaviors to the UE).

Table 1 below shows an example PDCCH monitoring behavior mapping, in which the UE is only configured with 1 PDCCH monitoring skipping duration. It is to be understood that the "deactivating PDCCH monitoring skipping" behavior may not need to be explicitly configured to the UE PDCCH monitoring behaviors list.

Table 1: PDCCH Monitoring Behavior Mapping

| Codepoint | PDCCH monitoring behavior |
|:---:|:---:|
| 0 | Deactivating PDCCH monitoring skipping |
| 1 | PDCCH monitoring skipping for the first duration |

Table 2 below shows another example PDCCH monitoring behavior mapping, in which the UE is configured with 4 PDCCH monitoring skipping durations. Not shown in Table 5, each duration may be associated with an index, and the codepoint may map to the index.

Table 2: PDCCH Monitoring Behavior Mapping

| Codepoint | PDCCH monitoring behavior |
|-----------|---------------------------|
| 00 | PDCCH monitoring skipping for duration 1 |
| 01 | PDCCH monitoring skipping for duration 2 |
| 10 | PDCCH monitoring skipping for duration 3 |
| 11 | PDCCH monitoring skipping for duration 4 |

In one implementation, the UE is configured with M (M is an integer) PDCCH skipping durations and the UE may or may not be configured with a SSSG switching behavior. If there is one codepoint left after indicating all the PDCCH monitoring behaviors, the leftover codepoint may map to "Deactivating PDCCH monitoring skipping". Table 3 below shows an example in which there are two leftover codepoints.

Table 3: PDCCH Monitoring Behavior Mapping

| Codepoint | PDCCH monitoring behavior |
|-----------|---------------------------|
| 00 (leftover CP) | Deactivating PDCCH monitoring skipping |
| 01 | PDCCH monitoring skipping for duration 1 |
| 10 | PDCCH monitoring skipping for duration 2 |
| 11 (leftover CP) | Deactivating PDCCH monitoring skipping |

Table 4 below shows an example in which there are one leftover codepoint.

Table 4: PDCCH Monitoring Behavior Mapping

| Codepoint | PDCCH monitoring behavior |
|-----------|---------------------------|
| 00 | SSSG switching to SSSG 0 |
| 01 | SSSG switching to SSSG 1 |
| 10 | PDCCH monitoring skipping for duration 1 |
| 11 (leftover CP) | Deactivating PDCCH monitoring skipping |

In one implementation, the UE is configured with M PDCCH monitoring skipping durations and N SSSG switching behaviors, with both M and N being integers. The "deactivating PDCCH monitoring skipping" behavior is not mapped. That is, no codepoint in the DCI field is mapped to this behavior. Alternatively, the "deactivating PDCCH monitoring skipping" behavior is not mapped, if there is at least one SSSG switching behavior configured, and the total number of configured PDCCH monitoring behaviors is greater than 4.

In one implementation, when mapping the PDCCH monitoring behaviors, one type of UE PDCCH monitoring behavior is mapped first, followed by another type of UE PDCCH monitoring behavior. For example, the first type PDCCH monitoring behavior is mapped first, and then the second type PDCCH monitoring behavior. The mapping order may be pre-determined, or configured by higher layer signaling. Table 5 below shows an example in which the second type PDCCH monitoring behavior is mapped first, then the first type PDCCH monitoring behavior.

Table 5: PDCCH Monitoring Behavior Mapping

| Codepoint | PDCCH monitoring behavior |
|-----------|---------------------------|
| 00 | SSSG switching to SSSG 0 |
| 01 | SSSG switching to SSSG 1 |
| 10 | PDCCH monitoring skipping for duration 1 |
| 11 (leftover CP) | Not mapped / or Deactivating PDCCH monitoring skipping |

In one implementation, the UE is configured with M PDCCH skipping durations and N SSSG switching behaviors, and the bit-width of the DCI field is 2. The first two codepoints (i.e., "00" and "01") may be mapped to one or two PDCCH monitoring skipping behaviors, and the rest two codepoints (i.e., "10" and "11") may be mapped to one or two SSSG switching behaviors.

In one implementation, the UE is configured with M PDCCH skipping durations and N SSSG switching behaviors, and the bit-width of the DCI field is 2 (i.e., supports 4 codepoints). The first I codepoints (e.g., I=3) may be mapped to one type of PDCCH monitoring behaviors, and the rest codepoints (e.g., I=1) may be mapped to another type of PDCCH monitoring behaviors.

In one implementation, the mapping method may be configured by a higher layer signaling. For example, a Medium Access Control - Control Element (MAC CE) signaling may indicate the mapping information, such as a method for mapping DCI codepoints with PDCCH monitoring behaviors. For another example, each PDCCH monitoring behavior may be associated with an index. The index may be assigned to a corresponding PDCCH monitoring behavior when the base station configures the PDCCH monitoring behaviors for the UE. The codepoint in the DCI field may indicate a corresponding PDCCH monitoring behavior based on the index. For example, a codepoint value m may indicate the PDCCH monitoring behavior with index m, where m is a non-negative integer. The index may also be assigned followed by a pre-determined rule. For another example, an RRC signaling may indicate the mapping information, such as a method for mapping DCI codepoints with PDCCH monitoring behaviors.

In one implementation, if the total number of PDCCH monitoring behaviors configured to the UE is larger than the maximum number of mapping that a DCI field is able to support (e.g., due to limited number of bits in the DCI field), some PDCCH monitoring behaviors may not be mapped.

In some embodiments, the mapping method may be based on at least one of: a higher layer signaling, a UE capability, or a predefined information.

In one implementation, the UE capability indicates that the maximum number of bit-width (i.e., the bit-width of the DCI field for mapping indication) supported is 1. The codepoint may indicate 2 first type PDCCH monitoring behaviors, e.g., a "deactivating PDCCH monitoring skipping" behavior and a "skipping PDCCH monitoring for a duration" behavior. The codepoint may also indicate 2 second type PDCCH monitoring behaviors.

In one implementation, if the UE capability indicates that the maximum number of bit-width (i.e., the bit-width of the DCI field for mapping indication) supported is 1, at most one out two particular SSSG switching behaviors may be mapped. These 2 particular SSSG switching behaviors may be pre-determined, or configured by higher layer signaling, or SSSG other than default SSSG. Alternatively, one skipping PDCCH monitoring behavior, and one SSSG switching behavior may not be mapped.

In one implementation, more than one type of DCIs may be used to indicate a PDCCH monitoring behavior. For example, a first type DCI may be used to indicate mapping to first type PDCCH monitoring behaviors, and a second type DCI may be used to indicate mapping to second type PDCCH monitoring behaviors. The type of a DCI may be determined by its DCI format.

In one implementation, multiple PDCCH monitoring behavior sets may be configure to the UE. For example, the configuration information may include information for two PDCCH monitoring behavior sets, and the configuration information may be sent to the UE in a same message, or in different messages. Different types of DCI may be used to indicate PDCCH monitoring behavior in different PDCCH monitoring behavior set. The type of DCI may be based on DCI format. For example, a first type DCI may be used to indicate mapping to PDCCH monitoring behavior from the one PDCCH monitoring behaviors set, and a second type DCI may be used to indicate mapping to PDCCH monitoring behavior from another PDCCH monitoring behaviors set.

In one implementation, predefined information or UE capability may indicate the maximum number of PDCCH skipping durations that can be mapped, and/or the maximum number of SSSG switching behavior that can be mapped. For example, the UE is configured with 2 PDCCH skipping durations and 3 SSSG switching behaviors. The maximum number of PDCCH skipping durations that can be mapped is 1, the maximum number of SSSG switching behavior that can be mapped is 3, as per the predefined information. Only one PDCCH skipping duration (e.g., the first one) and all 3 SSSG switching behaviors may be mapped.

In one implementation, the bit-width of the DCI field may be indicated to the UE via an RRC signaling. The RRC signaling may include the same RRC signaling that configure the PDCCH monitoring behaviors of the UE, or another RRC signaling.

In one implementation, a method for mapping DCI codepoints with PDCCH monitoring behaviors is by predefined rules (e.g., predefined by protocol).

In one implementation, the RRC signaling may indicate that the bit-width of the DCI field is 1. The codepoint of the DCI field may indicate 2 first type PDCCH monitoring behaviors, e.g., a "deactivating PDCCH monitoring skipping" behavior and a "skipping PDCCH monitoring for a duration" behavior, if they are configured to the UE. The codepoint may also indicate 2 second type PDCCH monitoring behaviors, if they are configured to the UE.

In one implementation, if the RRC signaling indicates that the bit-width of the DCI field is 1, then 2 particular SSSG switching behaviors may not be mapped. These 2 particular SSSG switching behaviors may be pre-determined, or configured by higher layer signaling, or SSSG other than default SSSG. Alternatively, one skipping PDCCH monitoring behavior, and one SSSG switching behavior may not be mapped.

In one implementation, the mapping of a first type PDCCH monitoring behavior and a first type SSSG may not may not be supported at same time.

In one implementation, the mapping of a first type PDCCH monitoring behavior and a first type SSSG may not may not be supported at same time, if the total number of PDCCH monitoring behaviors is greater than 4.

In one implementation, a first type SSSG may not may not be mapped if the total number of PDCCH monitoring behaviors is greater than 4.

In one implementation, one portion of bits in the DCI field indicates a PDCCH monitoring behavior subset, and another portion of bits in the DCI field indicate a PDCCH monitoring behavior in the PDCCH monitoring behavior subset. Table 6 below shows an example in which there are 2 bits in the DCI field.

Table 6: PDCCH Monitoring Behavior Mapping

| First bit: indicating PDCCH monitoring behavior subset | Second bit: indicating PDCCH monitoring behavior in the subset | PDCCH monitoring behavior |
|---|---|---|
| 0 | 0 | SSSG 0 |
| | 1 | SSSG 1 |
| 1 | 0 | PDCCH monitoring skipping for duration 1 |
| | 1 | PDCCH monitoring skipping for duration 2 |

## **Mapping Examples**

In this disclosure, various PDCCH monitoring behavior mapping examples are described below.

### *Example 1*

In this example, the UE is configured with 3 monitoring skipping durations (corresponding to 3 behaviors), and 3 SSSGs (3 behaviors for switching to the 3 SSSGs). The bit-width of the DCI field is 2. Among the 3 SSSGs, SSSG 2 is a first type SSSG. The first type SSSG is described in earlier section.

Table 6 below shows two mapping methods. As SSSG 2 is a first type SSSG, neither the two methods map the behavior of switching to SSSG 2.

Table 7: PDCCH Monitoring Behavior Mapping

| Codepoint | Mapping Method 1 | Mapping Method 2 |
|---|---|---|
| 00 | SSSG switching to SSSG 0 | SSSG switching to SSSG 1 |
| 01 | SSSG switching to SSSG 1 | PDCCH monitoring skipping for duration 1 |
| 10 | PDCCH monitoring skipping for duration 1 | PDCCH monitoring skipping for duration 2 |
| 11 | PDCCH monitoring skipping for duration 2 | PDCCH monitoring skipping for duration 3 |

### *Example 2*

Example 2 is similar to example 1, except SSSG 2 is not first type SSSG. Table 7 below shows 3 mapping methods.

Table 8: PDCCH Monitoring Behavior Mapping

| Codepoint | Mapping Method 1 | Mapping Method 2 | Mapping Method 3 |
|---|---|---|---|
| 00 | SSSG switching to SSSG 0 | SSSG switching to SSSG 1 | SSSG switching to SSSG 0 |
| 01 | SSSG switching to SSSG 1 | PDCCH monitoring skipping for duration 1 | SSSG switching to SSSG 1 |

(continued)

| Codepoint | Mapping Method 1 | Mapping Method 2 | Mapping Method 3 |
|---|---|---|---|
| 10 | PDCCH monitoring skipping for duration 1 | PDCCH monitoring skipping for duration 2 | SSSG switching to SSSG 2 |
| 11 | PDCCH monitoring skipping for duration 2 | PDCCH monitoring skipping for duration 3 | PDCCH monitoring skipping for duration 1 |

In method 3, SSSG switching to SSSG 2 is mapped to codepoint 10 in binary.

*Example 3*

In this example, the UE is configured with 4 PDCCH monitoring skipping durations (corresponding to 4 behaviors), and 2 SSSGs (2 behaviors for switching to the 2 SSSGs). The bit-width of the DCI field is 2. The mapping method maps 2 SSSGs and 2 PDCCH monitoring skipping durations, as shown in Table 8 below.

Table 9: PDCCH Monitoring Behavior Mapping

| Codepoint | Mapping |
|---|---|
| 00 | SSSG switching to SSSG 0 |
| 01 | SSSG switching to SSSG 1 |
| 10 | PDCCH monitoring skipping for duration 1 |
| 11 | PDCCH monitoring skipping for duration 2 |

**UE Capability Signaling**

Referring to FIG. 4, in step 4a, the UE may send its UE capability to the base station via a message, such as a UE capability signaling.
The signaling may use various conditions of a DCI for it to be used for indicating PDCCH monitoring behavior.
For example, the condition includes a DCI format. The signaling may indicate whether a DCI of a particular format is supported by the UE for indicating PDCCH monitoring behaviors. The DCI format may include:

- DCI 0_1;
- DCI 1_1;
- DCI 0_2; or
- DCI 1_2;

The signaling may indicate if the UE supports indicating a second type PDCCH monitoring behaviors using DCI with format DCI 0_1 or DCI 1_1, or DCI with format DCI 0_2 or DCI 1_2.
For another example, the condition includes a specific field in the DCI, for example, a Secondary Cell (Scell) dormancy indication field. The signaling may indicate whether a the Scell dormancy indication field in a DCI may be used for the indication.
For another example, the condition includes a functionality of the DCI. For example, the signaling may further indicate whether a DCI which does not include a data scheduling indication may be used for the indication.
The above conditions may be used alone or in combination. Additionally, the above conditions may be used for the first type PDCCH monitoring behaviors, and/or the second type PDCCH monitoring behaviors.

*Example UE Capability Signaling*

The list below shows various examples for UE capability signaling may indicate:

- whether the UE supports to select PDCCH monitoring behavior from a second PDCCH monitoring behavior subset indicated by DCI 0_1 or/and DCI 1_1;
- whether the UE supports to select PDCCH monitoring behavior from a second PDCCH monitoring behavior subset indicated by DCI 0_2 or/and DCI 1_2;

- whether the UE supports to select PDCCH monitoring behavior from a second PDCCH monitoring behavior subset using Scell dormancy indication field;
- whether the UE supports to select PDCCH monitoring behavior from a second PDCCH monitoring behavior subset using a DCI which comprising Scell dormancy indication field and without a data scheduling indication;
- whether the UE supports to select PDCCH monitoring behavior from a first PDCCH monitoring behavior subset indicated by DCI 0_1 or/and DCI 1_1;
- whether the UE supports to select PDCCH monitoring behavior from a first PDCCH monitoring behavior subset indicated by DCI 0_2 or/and DCI 1_2;
- whether the UE supports to select PDCCH monitoring behavior from a first PDCCH monitoring behavior subset using Scell dormancy indication field;
- whether the UE supports to select PDCCH monitoring behavior from a first PDCCH monitoring behavior subset using a DCI which comprising Scell dormancy indication field and without a data scheduling indication;
- whether the UE supports to select PDCCH monitoring behavior from a first and second PDCCH monitoring behavior subset indicated by DCI 0_1 and/or DCI 1_1;
- whether the UE supports to select PDCCH monitoring behavior from a first and second PDCCH monitoring behavior subset indicated by DCI 0_2 and/or DCI 1_2;
- whether the UE supports to select PDCCH monitoring behavior from a first and second PDCCH monitoring behavior subset using Scell dormancy indication field;
- whether the UE supports to select PDCCH monitoring behavior from a first and second PDCCH monitoring behavior subset using a DCI which comprising Scell dormancy indication field and without a data scheduling indication;
- whether the UE supports empty SSSG or dormant SSSG; or
- whether the UE supports performs PDCCH monitoring for Hybrid Automatic Repeat Request (HARQ) retransmission during a retransmission period when the UE is indicated to skipping PDCCH monitoring and/or switching to 'dormant'/'empty' SSSG.

Dormant SSSG includes a SSSG associated with search space set. When associating with a dormant SSSG, A UE does not monitor PDCCH for a duration (or before a timer expire).

Empty SSSG means a SSSG not associate with any search space set.

In one implementation, in addition to indicate the Scell dormancy indication information using the Scell dormancy indication field, some other DCI fields may also be used. These fields include at least one of: Modulation and coding scheme of transport block 1 field, New data indicator of transport block 1 field, Redundancy version of transport block 1 field, HARQ process number field, Antenna port(s) field, DMRS sequence initialization field. For example, these fields may be used for Scell dormancy indication if the DCI does not carry a data scheduling indication.

## Example Codepoint Mapping with PDCCH monitoring behavior

Various examples for codepoint mapping are described in this section. The codepoint refers to the codepoint of the DCI field carrying PDCCH monitoring behavior indication information.

In one implementation, the codepoint may map to at least SSSG monitoring behavior associate with SSSG 0, if the bit-width of the DCI filed is 1 and SSSG 0 is configured.

In one implementation, the codepoints may map to PDCCH monitoring behaviors belong to a same PDCCH monitoring behavior subset if the bit-width of the DCI filed is 1.

In one implementation, the codepoint may map to at least SSSG monitoring behavior associate with SSSG 0 and SSSG monitoring behavior associate with SSSG 1, if two types of PDCCH monitoring behaviors are configured.

In one implementation, the codepoint may map to one of SSSG monitoring behavior associate with SSSG 0 or deactivating PDCCH monitoring skipping behavior, if two types of PDCCH monitoring behaviors are configured.

In one implementation, the codepoint may map to the PDCCH monitoring behavior belongs to a PDCCH monitoring behaviors subset which are supported by the UE as indicated by UE capability.

In one implementation, a first type SSSG may not be mapped if at least one PDCCH monitoring skipping duration is configured.

In one implementation, the codepoint may map to deactivating PDCCH monitoring skipping behavior only if the first type PDCCH monitoring behaviors subset is configured.

In one implementation, the codepoint in DCI field may map to M PDCCH monitoring behaviors, where M is an integer and not large than a pre-determined value.

The description and accompanying drawings above provide specific example embodiments and implementations. The described subject matter may, however, be embodied in a variety of different forms and, therefore, covered or claimed subject matter of the invention, whose scope is defined by the appended claims.

Among other things, for example, subject matter may be embodied as methods, devices, components, systems, or non-transitory computer-readable media for storing computer codes. Accordingly, embodiments may, for example, take the form of hardware, software, firmware, storage media or any combination thereof. For example, the method embodiments described above may be implemented by components, devices, or systems including memory and processors by executing computer codes stored in the memory.

In general, terminology may be understood at least in part from usage in context. For example, terms, such as "and", "or", or "and/or," as used herein may include a variety of meanings that may depend at least in part on the context in which such terms are used. Typically, "or" if used to associate a list, such as A, B or C, is intended to mean A, B, and C, here used in the inclusive sense, as well as A, B or C, here used in the exclusive sense. In addition, the term "one or more" as used herein, depending at least in part upon context, may be used to describe any feature, structure, or characteristic in a singular sense or may be used to describe combinations of features, structures or characteristics in a plural sense. Similarly, terms, such as "a," "an," or "the," may be understood to convey a singular usage or to convey a plural usage, depending at least in part upon context. In addition, the term "based on" may be understood as not necessarily intended to convey an exclusive set of factors and may, instead, allow for the existence of additional factors not necessarily expressly described, again, depending at least in part on context.

Reference throughout this specification to features, advantages, or similar language does not imply that all of the features and advantages that may be realized with the present solution should be or are included in any single implementation thereof. Rather, language referring to the features and advantages is understood to mean that a specific feature, advantage, or characteristic described in connection with an embodiment is included in at least one embodiment of the present solution. Thus, discussions of the features and advantages, and similar language, throughout the specification may, but do not necessarily, refer to the same embodiment.

Furthermore, the described features, advantages and characteristics of the present solution may be combined in any suitable manner in one or more embodiments, but only insofar such combinations are encompassed within the scope of the invention as defined by the appended claims. One of ordinary skill in the relevant art will recognize, in light of the description herein, that the present solution may be practiced without one or more of the specific features or advantages of a particular embodiment. In other instances, additional features and advantages may be recognized in certain embodiments that may not be present in all embodiments of the present solution.

**Claims**

1. A method performed by a User Equipment, UE, comprising:

    receiving, from a wireless communication node, a configuration message comprising configuration information;
    receiving, from the wireless communication node, a downlink control information, DCI, message comprising a DCI field, wherein a codepoint of the DCI field is mapped to a Physical Downlink Control Channel, PDCCH, monitoring behavior from a PDCCH monitoring behavior set comprising multiple PDCCH monitoring behaviors;
    determining the PDCCH monitoring behavior based on the DCI message; and
    applying the PDCCH monitoring behavior,
    wherein the PDCCH monitoring behavior set comprises:

        a first PDCCH monitoring behavior subset comprising at least one of following:

            deactivating PDCCH monitoring skipping; and
            a list of PDCCH monitoring skipping behaviors, each PDCCH monitoring skipping behaviors being associated with a skipping duration, and

        a second PDCCH monitoring behavior subset comprising a list of Search Space Set Group, SSSG, monitoring behaviors,

    wherein the configuration information comprises at least one of: a set of durations associated with the first PDCCH monitoring behavior subset; and a set of SSSGs associated with the second PDCCH monitoring behavior subset.

2. The method of claim 1, wherein:

    the set of SSSGs comprises a first type SSSG; and
    the set of SSSGs does not co-exist in the PDCCH monitoring behavior set with the set of durations in the configuration information; and the first type SSSG comprises:

an SSSG configured without a search space set;

an SSSG associated with an index greater than or equal to 2 indicating there are more than 2 SSSGs in the set of SSSGs;

a dormant SSSG; or

an SSSG associated with which the UE can stop monitoring PDCCH for a duration.

3. The method of claim 1, wherein the list of SSSG monitoring behaviors comprises at least one of:

stopping monitoring a Search Space Set, SSS, associated with a first SSSG and a second SSSG, and monitoring an SSS associated with a third SSSG;

stopping monitoring an SSS associated with the first SSSG and the third SSSG and monitoring an SSS associated with the second SSSG; or

stopping monitoring an SSS associated with the second SSSG and the third SSSG and monitoring an SSS associated with the first SSSG.

4. The method of claim 1, wherein:

the PDCCH monitoring behavior set is determined by at least one of:

a UE capability of the UE;

a pre-determined value; or

a bit-width of the DCI field; and

the UE capability or a pre-determined value comprises at least one of:

a maximum number of indication bits for indicating the selection of the PDCCH monitoring behavior;

a maximum number of PDCCH monitoring behaviors supported by the UE;

a maximum number of PDCCH skipping durations supported by the UE; or

a maximum number of SSSGs supported by the UE.

5. The method of claim 1, wherein:

before determining the PDCCH monitoring behavior based on the DCI message, the method further comprises determining a bit-width of the DCI field;

determining the PDCCH monitoring behavior based on the DCI message comprises:

determining the PDCCH monitoring behavior based on the DCI message and the bit-width of the DCI field; and

determining the bit-width of the DCI field comprises determining the bit-width of the DCI field according to at least one of:

a higher layer signaling;

a UE capability of the UE;

a predefined value; or

a DCI format of the DCI message.

6. The method of claim 1, wherein:

one or more codepoints in the DCI field are mapped to PDCCH monitoring behaviors belong to a same PDCCH monitoring behavior subset if a bit-width of the DCI field is 1, or

when two types of PDCCH monitoring behaviors are configured, a codepoint in the DCI field is mapped to at least SSSG monitoring behavior associated with SSSG 0 and SSSG monitoring behavior associated with SSSG 1, or

when M PDCCH skipping durations and no SSSG are configured, a codepoint in the DCI field indicates no skipping for PDCCH monitoring if the codepoint has all zero value, M being an integer less than 4, or

in response to two types of PDCCH monitoring behaviors being configured to the UE, determining a bit-width of the DCI field to be 2.

7. The method of claim 1, wherein:

when the codepoint is 00, the codepoint indicates starting to monitor SSSG 0;

when the codepoint is 01, the codepoint indicates starting to monitor SSSG 1;
when the codepoint is 10, the codepoint indicates skipping monitoring PDCCH for a preconfigured duration; and
when the codepoint is 11, the codepoint is not mapped to any PDCCH monitoring behavior.

8. A method performed by a wireless communication node, comprising:

transmitting, to a User Equipment, UE, a configuration message comprising configuration information; and
transmitting, to the UE, a downlink control information, DCI, message comprising a DCI field, wherein a codepoint of the DCI field is mapped to a Physical Downlink Control Channel, PDCCH, monitoring behavior from a PDCCH monitoring behavior set comprising multiple PDCCH monitoring behaviors, wherein the DCI message triggers the UE to apply the PDCCH monitoring behavior,
wherein the PDCCH monitoring behavior set comprises:

a first PDCCH monitoring behavior subset comprising at least one of following:

deactivating PDCCH monitoring skipping; or
a list of PDCCH monitoring skipping behaviors, each PDCCH monitoring skipping behaviors being associated with a skipping duration; and

a second PDCCH monitoring behavior subset comprising a list of Search Space Set Group, SSSG, monitoring behaviors,

wherein the configuration information comprises at least one of: a set of durations associated with the first PDCCH monitoring behavior subset; or a set of SSSGs associated with the second PDCCH monitoring behavior subset.

9. The method of claim 8, wherein:

the set of SSSGs comprises a first type SSSG; and
the set of SSSGs does not co-exist in the PDCCH monitoring behavior set with the set of durations in the configuration information; and the first type SSSG comprises:

an SSSG configured without a search space set;
an SSSG associated with an index greater than or equal to 2 indicating there are more than 2 SSSGs in the set of SSSGs;
a dormant SSSG; or
an SSSG associated with which the UE can stop monitoring PDCCH for a duration.

10. The method of claim 8, wherein the list of SSSG monitoring behaviors comprises at least one of: stopping monitoring a Search Space Set, SSS, associated with a first SSSG and a second SSSG, and monitoring an SSS associated with a third SSSG; stopping monitoring an SSS associated with the first SSSG and the third SSSG and monitoring an SSS associated with the second SSSG; or stopping monitoring an SSS associated with the second SSSG and the third SSSG and monitoring an SSS associated with the first SSSG, or
wherein the PDCCH monitoring behavior set is determined by at least one of:

a UE capability of the UE;
a pre-determined value; or
a bit-width of the DCI field.

11. A User Equipment, UE, comprising a memory for storing computer instructions and a processor in communication with the memory, wherein, when the processor executes the computer instructions, the processor is configured to cause the UE to:

receive, from a wireless communication node, a configuration message comprising configuration information;
receive, from the wireless communication node, a downlink control information, DCI, message comprising a DCI field, wherein a codepoint of the DCI field is mapped to a Physical Downlink Control Channel, PDCCH, monitoring behavior from a PDCCH monitoring behavior set comprising multiple PDCCH monitoring behaviors;
determine the PDCCH monitoring behavior based on the DCI message; and
apply the PDCCH monitoring behavior,

wherein the PDCCH monitoring behavior set comprises:

a first PDCCH monitoring behavior subset comprising at least one of following:

deactivating PDCCH monitoring skipping; and
a list of PDCCH monitoring skipping behaviors, each PDCCH monitoring skipping behaviors being associated with a skipping duration; and

a second PDCCH monitoring behavior subset comprising a list of Search Space Set Group, SSSG, monitoring behaviors,

wherein the configuration information comprises at least one of: a set of durations associated with the first PDCCH monitoring behavior subset; and a set of SSSGs associated with the second PDCCH monitoring behavior subset.

**Patentansprüche**

1. Verfahren, das durch eine Benutzereinrichtung, UE, durchgeführt wird, aufweisend:

Empfangen, von einem drahtlosen Kommunikationsknoten, einer Konfigurationsnachricht, aufweisend Konfigurationsinformationen;
Empfangen, von dem drahtlosen Kommunikationsknoten, einer Downlink-Steuerinformationsnachricht, DCI-Nachricht, aufweisend ein DCI-Feld, wobei ein Codepunkt des DCI-Felds auf ein Überwachungsverhalten eines physikalischen Downlink-Steuerkanals, PDCCH, aus einem PDCCH-Überwachungsverhaltenssatz abgebildet wird, aufweisend mehrere PDCCH-Überwachungsverhalten;
Bestimmen des PDCCH-Überwachungsverhaltens basierend auf der DCI-Nachricht; und
Anwenden des PDCCH-Überwachungsverhaltens,
wobei der PDCCH-Überwachungsverhaltenssatz aufweist:
einen ersten PDCCH-Überwachungsverhaltensteilsatz, aufweisend mindestens eines der Folgenden:

Deaktivieren eines PDCCH-Überwachungsüberspringens; und
eine Liste von PDCCH-Überwachungsüberspringungsverhalten, wobei jedes PDCCH-Überwachungsüberspringungsverhalten einer Überspringungsdauer zugeordnet ist, und
einen zweiten PDCCH-Überwachungsverhaltensteilsatz, aufweisend eine Liste von Suchraumsatzgruppenüberwachungsverhalten, SSSG-Überwachungsverhalten,
wobei die Konfigurationsinformationen mindestens eines aufweisen von: einem Satz von Dauern, die dem ersten PDCCH-Überwachungsverhaltensteilsatz zugeordnet sind; und einem Satz von SSSGs, die dem zweiten PDCCH-Überwachungsverhaltensteilsatz zugeordnet sind.

2. Verfahren nach Anspruch 1, wobei:

der Satz von SSSGs eine SSSG von einem ersten Typ aufweist; und
der Satz von SSSGs nicht mit dem Satz von Dauern in den Konfigurationsinformationen in dem PDCCH-Überwachungsverhaltenssatz koexistiert; und die SSSG des ersten Typs aufweist:

eine SSSG, die ohne einen Suchraumsatz konfiguriert ist;
eine SSSG, die einem Index größer als oder gleich 2 zugeordnet ist, was anzeigt, dass es mehr als 2 SSSGs in dem Satz von SSSGs gibt;
eine ruhende SSSG; oder
eine zugeordnete SSSG, mit der die UE das PDCCH-Überwachen für eine Dauer stoppen kann.

3. Verfahren nach Anspruch 1, wobei die Liste von SSSG-Überwachungsverhalten mindestens eines aufweist von:

Beenden des Überwachens eines Suchraumsatzes, SSS, der einer ersten SSSG und einer zweiten SSSG zugeordnet ist, und Überwachen eines SSS, der einer dritten SSSG zugeordnet ist;
Beenden des Überwachens eines SSS, der der ersten SSSG und der dritten SSSG zugeordnet ist, und Überwachen eines SSS, der der zweiten SSSG zugeordnet ist; oder
Beenden des Überwachens eines SSS, der der zweiten SSSG und der dritten SSSG zugeordnet ist, und Überwachen eines SSS, der der ersten SSSG zugeordnet ist.

4. Verfahren nach Anspruch 1, wobei:
   der PDCCH-Überwachungsverhaltenssatz durch mindestens eines bestimmt wird von:

   einer UE-Fähigkeit der UE;
   einem vorbestimmten Wert; oder
   einer Bitbreite des DCI-Felds; und
   die UE-Fähigkeit oder ein vorbestimmter Wert mindestens eines aufweist von:

   einer maximalen Anzahl von Anzeigebits zum Anzeigen der Auswahl des PDCCH-Überwachungsverhaltens;
   einer maximalen Anzahl von PDCCH-Überwachungsverhalten, die von der UE unterstützt werden;
   einer maximalen Anzahl von PDCCH-Überspringungsdauern, die von der UE unterstützt werden; oder
   einer maximalen Anzahl von SSSGs, die von der UE unterstützt werden.

5. Verfahren nach Anspruch 1, wobei:

   vor dem Bestimmen des PDCCH-Überwachungsverhaltens basierend auf der DCI-Nachricht, das Verfahren
   ferner ein Bestimmen einer Bitbreite des DCI-Felds aufweist;
   das Bestimmen des PDCCH-Überwachungsverhaltens basierend auf der DCI-Nachricht aufweist:

   Bestimmen des PDCCH-Überwachungsverhaltens basierend auf der DCI-Nachricht und der Bitbreite des
   DCI-Felds; und
   das Bestimmen der Bitbreite des DCI-Felds ein Bestimmen der Bitbreite des DCI-Felds gemäß mindestens
   einem aufweist von:

   einer Signalisierung höherer Schicht;
   einer UE-Fähigkeit der UE;
   einem vorgegebenen Wert; oder
   einem DCI-Format der DCI-Nachricht.

6. Verfahren nach Anspruch 1, wobei:

   ein oder mehrere Codepunkte in dem DCI-Feld auf PDCCH-Überwachungsverhalten abgebildet werden, die zu
   einem selben PDCCH-Überwachungsverhaltensteilsatz gehören, falls eine Bitbreite des DCI-Felds 1 ist, oder
   wenn zwei Typen von PDCCH-Überwachungsverhalten konfiguriert sind, ein Codepunkt in dem DCI-Feld auf
   mindestens ein SSSG-Überwachungsverhalten, das SSSG 0 zugeordnet ist, und ein SSSG-Überwachungsverhalten, das SSSG 1 zugeordnet ist, abgebildet wird, oder
   wenn M PDCCH-Überspringungsdauern und keine SSSG konfiguriert sind, ein Codepunkt in dem DCI-Feld kein
   Überspringen für die PDCCH-Überwachung anzeigt, falls der Codepunkt einen Wert von nur Nullen aufweist,
   wobei M eine ganze Zahl kleiner als 4 ist, oder
   als Reaktion auf zwei Typen von PDCCH-Überwachungsverhalten, die für die UE konfiguriert sind, Bestimmen
   einer Bitbreite des DCI-Felds auf 2.

7. Verfahren nach Anspruch 1, wobei:

   wenn der Codepunkt 00 ist, der Codepunkt anzeigt, dass mit dem Überwachen von SSSG 0 begonnen wird;
   wenn der Codepunkt 01 ist, der Codepunkt anzeigt, dass mit dem Überwachen von SSSG 1 begonnen wird;
   wenn der Codepunkt 10 ist, der Codepunkt das Überspringen des Überwachens des PDCCH für eine vorkonfigurierte Dauer anzeigt; und
   wenn der Codepunkt 11 ist, der Codepunkt auf kein PDCCH-Überwachungsverhalten abgebildet wird.

8. Verfahren, das durch einen drahtlosen Kommunikationsknoten durchgeführt wird, aufweisend:

   Übertragen einer Konfigurationsnachricht, die Konfigurationsinformationen aufweist, an eine Benutzereinrichtung, UE; und
   Übertragen, an die UE, einer Downlink-Steuerinformationsnachricht, DCI-Nachricht, aufweisend ein DCI-Feld, wobei ein Codepunkt des DCI-Felds auf ein Überwachungsverhalten des physikalischen Downlink-Steuerkanals, PDCCH, aus einem PDCCH-Überwachungsverhaltenssatz abgebildet wird, aufweisend mehrere PDCCH-Überwachungsverhalten, wobei die DCI-Nachricht die UE veranlasst, das PDCCH-Überwachungsverhalten anzuwenden,

wobei der PDCCH-Überwachungsverhaltenssatz aufweist:

einen ersten PDCCH-Überwachungsverhaltensteilsatz, aufweisend mindestens eines der Folgenden:

Deaktivieren des PDCCH-Überwachungsüberspringens; oder
eine Liste von PDCCH-Überwachungsüberspringungsverhalten, wobei jedes PDCCH-Überwachungsüberspringungsverhalten einer Überspringungsdauer zugeordnet ist; und
einen zweiten PDCCH-Überwachungsverhaltensteilsatz, aufweisend eine Liste von Suchraumsatzgruppenüberwachungsverhalten, SSSG-Überwachungsverhalten,
wobei die Konfigurationsinformationen mindestens eines aufweisen von: einem Satz von Dauern, die dem ersten PDCCH-Überwachungsverhaltensteilsatz zugeordnet sind; oder einem Satz von SSSGs, die dem zweiten PDCCH-Überwachungsverhaltensteilsatz zugeordnet sind.

9. Verfahren nach Anspruch 8, wobei:

der Satz von SSSGs eine SSSG von einem ersten Typ aufweist; und
der Satz von SSSGs nicht mit dem Satz von Dauern in den Konfigurationsinformationen in dem PDCCH-Überwachungsverhaltenssatz koexistiert; und die SSSG des ersten Typs aufweist:

eine SSSG, die ohne einen Suchraumsatz konfiguriert ist;
eine SSSG, die einem Index größer als oder gleich 2 zugeordnet ist, was anzeigt, dass es mehr als 2 SSSGs in dem Satz von SSSGs gibt;
eine ruhende SSSG; oder
eine zugeordnete SSSG, mit der die UE das PDCCH-Überwachen für eine Dauer stoppen kann.

10. Verfahren nach Anspruch 8, wobei die Liste von SSSG-Überwachungsverhalten mindestens eines aufweist von: Beenden des Überwachens eines Suchraumsatzes, SSS, der einer ersten SSSG und einer zweiten SSSG zugeordnet ist, und Überwachen eines SSS, der einer dritten SSSG zugeordnet ist; Beenden des Überwachens eines SSS, der der ersten SSSG und der dritten SSSG zugeordnet ist, und Überwachen eines SSS, der der zweiten SSSG zugeordnet ist; oder Beenden des Überwachens eines SSS, der der zweiten SSSG und der dritten SSSG zugeordnet ist, und Überwachen eines SSS, der der ersten SSSG zugeordnet ist, oder
wobei der PDCCH-Überwachungsverhaltenssatz durch mindestens eines bestimmt wird von:

einer UE-Fähigkeit der UE;
einem vorbestimmten Wert; oder
einer Bitbreite des DCI-Felds.

11. Benutzereinrichtung, UE, aufweisend einen Speicher zum Speichern von Computeranweisungen und einen Prozessor, der mit dem Speicher in Kommunikation steht, wobei, wenn der Prozessor die Computeranweisungen ausführt, der Prozessor konfiguriert ist, um die UE zu veranlassen zum:

Empfangen, von einem drahtlosen Kommunikationsknoten, einer Konfigurationsnachricht, aufweisend Konfigurationsinformationen;
Empfangen, von dem drahtlosen Kommunikationsknoten, einer Downlink-Steuerinformationsnachricht, DCI-Nachricht, aufweisend ein DCI-Feld, wobei ein Codepunkt des DCI-Felds auf ein Überwachungsverhalten des physikalischen Downlink-Steuerkanals, PDCCH, aus einem PDCCH-Überwachungsverhaltenssatz abgebildet wird, aufweisend mehrere PDCCH-Überwachungsverhalten;
Bestimmen des PDCCH-Überwachungsverhaltens basierend auf der DCI-Nachricht; und
Anwenden des PDCCH-Überwachungsverhaltens,
wobei der PDCCH-Überwachungsverhaltenssatz aufweist:
einen ersten PDCCH-Überwachungsverhaltensteilsatz, aufweisend mindestens eines der Folgenden:

Deaktivieren des PDCCH-Überwachungsüberspringens; und
eine Liste von PDCCH-Überwachungsüberspringungsverhalten, wobei jedes PDCCH-Überwachungsüberspringungsverhalten einer Überspringungsdauer zugeordnet ist; und

einen zweiten PDCCH-Überwachungsverhaltensteilsatz, aufweisend eine Liste von Suchraumsatzgruppenüberwachungsverhalten, SSSG-Überwachungsverhalten,

wobei die Konfigurationsinformationen mindestens eines aufweisen von: einem Satz von Dauern, die dem ersten PDCCH-Überwachungsverhaltensteilsatz zugeordnet sind; und einem Satz von SSSGs, die dem zweiten PDCCH-Überwachungsverhaltensteilsatz zugeordnet sind.

**Revendications**

1. Procédé réalisé par un équipement utilisateur, UE, comprenant :

la réception, à partir d'un nœud de communication sans fil, d'un message de configuration comprenant des informations de configuration ;

la réception, à partir du nœud de communication sans fil, d'un message d'informations de commande de liaison descendante, DCI, comprenant un champ DCI, dans lequel un point de code du champ DCI est mappé sur un comportement de surveillance de canal de commande de liaison descendante physique, PDCCH, à partir d'un ensemble de comportements de surveillance de PDCCH comprenant de multiples comportements de surveillance de PDCCH ;

la détermination du comportement de surveillance de PDCCH en fonction du message de DCI ; et

l'application du comportement de surveillance de PDCCH,

dans lequel l'ensemble de comportements de surveillance de PDCCH comprend :

un premier sous-ensemble de comportements de surveillance de PDCCH comprenant au moins l'un parmi ce qui suit :

la désactivation d'un saut de surveillance de PDCCH ; et

une liste de comportements de saut de surveillance de PDCCH, chaque comportement de saut de surveillance de PDCCH étant associé à une durée de saut, et

un second sous-ensemble de comportements de surveillance de PDCCH comprenant une liste de comportements de surveillance de groupe d'ensembles d'espaces de recherche, SSSG,

dans lequel les informations de configuration comprennent au moins l'un parmi : un ensemble de durées associé au premier sous-ensemble de comportements de surveillance de PDCCH ; et un ensemble de SSSG associé au second sous-ensemble de comportements de surveillance de PDCCH.

2. Procédé selon la revendication 1, dans lequel :

l'ensemble de SSSG comprend un SSSG de premier type ; et

l'ensemble de SSSG ne coexiste pas dans l'ensemble de comportements de surveillance de PDCCH avec l'ensemble de durées dans les informations de configuration ; et le SSSG de premier type comprend :

un SSSG configuré sans un ensemble d'espaces de recherche ;

un SSSG associé à un indice supérieur ou égal à 2, indiquant qu'il y a plus de 2 SSSG dans l'ensemble de SSSG ;

un SSSG dormant ; ou

un SSSG associé auquel l'UE peut arrêter la surveillance du PDCCH pendant une durée.

3. Procédé selon la revendication 1, dans lequel la liste de comportements de surveillance de SSSG comprend au moins l'un parmi :

l'arrêt de la surveillance d'un ensemble d'espaces de recherche, SSS, associé à un premier SSSG et à un deuxième SSSG, et la surveillance d'un SSS associé à un troisième SSSG ;

l'arrêt de la surveillance d'un SSS associé au premier SSSG et au troisième SSSG et la surveillance d'un SSS associé au deuxième SSSG ; ou

l'arrêt de la surveillance d'un SSS associé au deuxième SSSG et au troisième SSSG, et la surveillance d'un SSS associé au premier SSSG.

4. Procédé selon la revendication 1, dans lequel :
l'ensemble de comportements de surveillance de PDCCH est déterminé par au moins l'un parmi :

une capacité d'UE de l'UE ;
une valeur prédéterminée ; ou
une largeur de bit du champ DCI ; et
la capacité d'UE ou une valeur prédéterminée comprend au moins l'un parmi :

un nombre maximal de bits d'indication pour indiquer la sélection du comportement de surveillance de PDCCH ;
un nombre maximal de comportements de surveillance de PDCCH pris en charge par l'UE ;
un nombre maximal de durées de saut de PDCCH prises en charge par l'UE ; ou
un nombre maximal de SSSG pris en charge par l'UE.

5. Procédé selon la revendication 1, dans lequel :

avant la détermination du comportement de surveillance de PDCCH en fonction du message de DCI, le procédé comprend en outre la détermination d'une largeur de bit du champ DCI ;
la détermination du comportement de surveillance de PDCCH en fonction du message de DCI comprend :

la détermination du comportement de surveillance de PDCCH en fonction du message de DCI et de la largeur de bit du champ DCI ; et
la détermination de la largeur de bit du champ DCI comprend la détermination de la largeur de bit du champ DCI selon au moins l'un parmi :

une signalisation de couche supérieure ;
une capacité d'UE de l'UE ;
une valeur prédéfinie ; ou
un format de DCI du message de DCI.

6. Procédé selon la revendication 1, dans lequel :

un ou plusieurs points de code dans le champ DCI sont mappés sur des comportements de surveillance de PDCCH appartenant à un même sous-ensemble de comportements de surveillance de PDCCH si une largeur de bit du champ DCI vaut 1, ou
lorsque deux types de comportements de surveillance de PDCCH sont configurés, un point de code dans le champ DCI est mappé sur au moins un comportement de surveillance de SSSG associé à SSSG 0 et un comportement de surveillance de SSSG associé à SSSG 1, ou
lorsque M durées de saut de PDCCH et qu'aucun SSSG ne sont configurés, un point de code dans le champ DCI indique l'absence de saut pour la surveillance de PDCCH si le point de code a une valeur entièrement nulle, M étant un nombre entier inférieur à 4, ou
en réponse à deux types de comportements de surveillance de PDCCH étant configurés pour l'UE, la détermination d'une largeur de bit du champ DCI comme valant 2.

7. Procédé selon la revendication 1, dans lequel :

lorsque le point de code vaut 00, le point de code indique le début de la surveillance de SSSG 0 ;
lorsque le point de code vaut 01, le point de code indique le début de la surveillance de SSSG 1 ;
lorsque le point de code vaut 10, le point de code indique le saut de la surveillance de PDCCH pendant une durée préconfigurée ; et
lorsque le point de code vaut 11, le point de code n'est mappé sur aucun comportement de surveillance de PDCCH.

8. Procédé réalisé par un nœud de communication sans fil, comprenant :

la transmission, à un équipement utilisateur, UE, d'un message de configuration comprenant des informations de configuration ; et
la transmission, à l'UE, d'un message d'informations de commande de liaison descendante, DCI, comprenant un champ DCI, dans lequel un point de code du champ DCI est mappé sur un comportement de surveillance de canal de commande de liaison descendante physique, PDCCH, à partir d'un ensemble de comportements de surveillance de PDCCH comprenant de multiples comportements de surveillance de PDCCH, dans lequel le message de DCI déclenche l'UE pour appliquer le comportement de surveillance de PDCCH,

dans lequel l'ensemble de comportements de surveillance de PDCCH comprend :

un premier sous-ensemble de comportements de surveillance de PDCCH comprenant au moins l'un parmi ce qui suit :

la désactivation d'un saut de surveillance de PDCCH ; ou

une liste de comportements de saut de surveillance de PDCCH, chaque comportement de saut de surveillance de PDCCH étant associé à une durée de saut ; et

un second sous-ensemble de comportements de surveillance de PDCCH comprenant une liste de comportements de surveillance de groupe d'ensembles d'espaces de recherche, SSSG,

dans lequel les informations de configuration comprennent au moins l'un parmi :

un ensemble de durées associé au premier sous-ensemble de comportements de surveillance de PDCCH ;

ou un ensemble de SSSG associé au second sous-ensemble de comportements de surveillance de PDCCH.

9. Procédé selon la revendication 8, dans lequel :

l'ensemble de SSSG comprend un SSSG de premier type ; et

l'ensemble de SSSG ne coexiste pas dans l'ensemble de comportements de surveillance de PDCCH avec l'ensemble de durées dans les informations de configuration ; et le SSSG de premier type comprend :

un SSSG configuré sans un ensemble d'espaces de recherche ;

un SSSG associé à un indice supérieur ou égal à 2 indiquant qu'il y a plus de 2 SSSG dans l'ensemble de SSSG ;

un SSSG dormant ; ou

un SSSG associé auquel l'UE peut arrêter la surveillance du PDCCH pendant une durée.

10. Procédé selon la revendication 8, dans lequel la liste de comportements de surveillance de SSSG comprend au moins l'un parmi : l'arrêt de la surveillance d'un ensemble d'espaces de recherche, SSS, associé à un premier SSSG et à un deuxième SSSG, et la surveillance d'un SSS associé à un troisième SSSG ; l'arrêt de la surveillance d'un SSS associé au premier SSSG et au troisième SSSG et la surveillance d'un SSS associé au deuxième SSSG ; ou l'arrêt de la surveillance d'un SSS associé au deuxième SSSG et au troisième SSSG et la surveillance d'un SSS associé au premier SSSG, ou

dans lequel l'ensemble de comportements de surveillance de PDCCH est déterminé par au moins l'un parmi :

une capacité d'UE de l'UE ;

une valeur prédéterminée ; ou

une largeur de bit du champ DCI.

11. Équipement utilisateur, UE, comprenant une mémoire permettant de stocker des instructions informatiques et un processeur en communication avec la mémoire, dans lequel, lorsque le processeur exécute les instructions informatiques, le processeur est configuré pour amener l'UE à :

recevoir, à partir d'un nœud de communication sans fil, un message de configuration comprenant des informations de configuration ;

recevoir, à partir du nœud de communication sans fil, un message d'informations de commande de liaison descendante, DCI, comprenant un champ DCI, dans lequel un point de code du champ DCI est mappé sur un comportement de surveillance de canal de commande de liaison descendante physique, PDCCH, à partir d'un ensemble de comportements de surveillance de PDCCH comprenant de multiples comportements de surveillance de PDCCH ;

déterminer le comportement de surveillance de PDCCH en fonction du message de DCI ; et

appliquer le comportement de surveillance de PDCCH,

dans lequel l'ensemble de comportements de surveillance de PDCCH comprend :

un premier sous-ensemble de comportements de surveillance de PDCCH comprenant au moins l'un parmi ce qui suit :

la désactivation d'un saut de surveillance de PDCCH ; et

une liste de comportements de saut de surveillance de PDCCH, chaque comportement de saut de surveillance de PDCCH étant associé à une durée de saut ; et

un second sous-ensemble de comportements de surveillance de PDCCH comprenant une liste de comportements de surveillance de groupe d'ensembles d'espaces de recherche, SSSG,

dans lequel les informations de configuration comprennent au moins l'un parmi : un ensemble de durées associé au premier sous-ensemble de comportements de surveillance de PDCCH ; et un ensemble de SSSG associé au second sous-ensemble de comportements de surveillance de PDCCH.

FIG. 1

FIG. 2

300

| Communication Interfaces | 302 |
| --- | --- |

| Antenna(s) | 314 |
| --- | --- |

| Tx / Rx Circuitry | 316 |
| --- | --- |
| BT/WLAN/NFC 2G/3G/4G/LTE/5G | |

| System Circuitry | 304 |
| --- | --- |

| I/O Interfaces | 306 |
| --- | --- |

| Display Circuitry | 308 |
| --- | --- |
| User interfaces | 310 |

| Storage | 309 |
| --- | --- |

| Processor(s) | 321 |
| --- | --- |

| Memories | 322 |
| --- | --- |

| Operating System | 324 |
| --- | --- |

| Instructions | 326 |
| --- | --- |

| Parameters | 328 |
| --- | --- |

FIG. 3

Base station

UE

401a: UE capability information related to
PDCCH monitoring

401: UE PDCCH monitoring behavior
configuration message (e.g., RRC message)

402: control message indicating a UE
PDCCH monitoring behavior to be applied
(e.g., DCI)

403: determine the indicated PDCCH
monitoring behavior from the control
message (e.g., based on a mapping
between the codepoint of the DCI field
and the PDCCH monitoring behavior)

404: apply the PDDCH monitoring
behavior.

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021098052 A1
- US 2021266841 A1
- US 2020229092 A1
- US 2020389874 A1